# EUROPÄISCHE PATENTSCHRIFT

(11) **EP 2 878 230 B1**
(45) Veröffentlichungstag und Bekanntmachung des Hinweises auf die Patenterteilung: **28.06.2017**
(21) Anmeldenummer: 14002365.6
(22) Anmeldetag: 09.07.2014
(51) Int. Cl.: A47C 20/04, A47C 20/08, F16C 1/10

(54) **Aufstellhebelmechanik mit Bowdenzug**
Positioning lever mechanism with Bowden cable assembly
Mécanisme de fixation à leviers doté de câble Bowden

(30) Priorität: 09.08.2013 DE 202013007106 U; 13.09.2013 DE 102013110096
(43) Veröffentlichungstag der Anmeldung: 03.06.2015
(73) Patentinhaber: Deon Group AG, 8002 Zürich (CH)
(72) Erfinder: Dewert, Eckhart, 8638 Goldingen (CH); Henle, Jörg, 97232 Giebelstadt-Allersheim (DE)
(74) Vertreter: Wagner, Carsten

(56) Entgegenhaltungen:
- CH-A- 379 075
- DE-A1-102008 028 586

## Beschreibung

Die Erfindung betrifft eine elektromotorisch verstellbare Stützeinrichtung, der im Oberbegriff des Anspruchs 1 genannten Art für eine Polsterung eines Sitz- und/oder Liegemöbels, insbesondere eine Matratze eines Bettes.

Derartige Stützeinrichtungen sind beispielsweise in Form von Lattenrosten allgemein bekannt.

Zur Verstellung beispielsweise von Lattenrosten sind sogenannte Doppelantriebe bekannt, die ein als separates, mit dem Lattenrost verbindbares Bauteil ausgebildetes Gehäuse aufweisen, in dem zwei Verstelleinheiten aufgenommen sind, von denen die eine beispielsweise zur Verstellung eines Rückenstützteiles und die andere zur Verstellung eines Beinstützteiles des Lattenrostes dient. Die Verstelleinheiten sind bei den bekannten Doppelantrieben als Spindelantrieb ausgebildet, wobei die antriebstechnische Ankopplung an ein zu verstellendes Stützteil über einen Anlenkhebel erfolgt, der drehfest mit einer Schwenkwelle verbunden ist, die dem zu verstellenden Stützteil zugeordnet ist. Zum Verstellen des Stützteiles drückt die Spindelmutter des Spindeltriebes gegen den Anlenkhebel, so dass die Schwenkwelle und damit das Stützteil verschwenkt. Derartige Doppelantriebe sind beispielsweise durch EP 0372032 A1 und DE 3842078 A1 bekannt.

Durch DE 10017989 C2 und DE 10017979 C2 ist jeweils ein als Doppelantrieb ausgebildeter Möbelantrieb bekannt, bei dem jede Verstelleinheit eine elektromotorisch angetriebene Aufwickelvorrichtung für ein seil-, band- oder kettenförmiges Zugmittel aufweist, das nach Art eines Flaschenzuges mit einem Schwenkhebel verbunden ist, der drehfest mit einer Schwenkwelle verbunden ist, die ihrerseits mit einem zu verstellenden Stützteil in Wirkungsverbindung steht.

Nach einem ähnlichen Wirkungsprinzip arbeitende Möbelantriebe sind auch durch DE 3409223 C2, DE 19843259 C1 und EP 1020171 A1 bekannt.

Nach unterschiedlichen Wirkungsprinzipien arbeitende Doppelantriebe sind ferner durch DE 197292812 A1, DE 29811566 U1 und DE 29714746 U1 bekannt.

Durch DE 3900384 ist ein verstellbarer Lattenrost bekannt, bei dem die Verstellung eines Kopf- oder Beinstützteiles des Lattenrostes mittels eines Pneumatikzylinders erfolgt.

Durch DE 29602947 U1 ist ein Gasfederverstellbeschlag für Lattenroste bekannt, wobei zum Betätigen der Gasfeder ein Seilzug vorgesehen ist.

Durch DE 3103922 A1 ist ein Lattenrost bekannt, bei dem die Verstellung beispielsweise eines Oberkörperstützteiles über einen Scheibenwischermotor und eine Hubschere erfolgt.

Durch EP 1294255 B1 ist ein Doppelantrieb bekannt, bei dem die Kraftübertragung von einem linear beweglichen Antriebselement auf einen Schwenkhebel, der mit einer mit einem zu verstellenden Stützteil in Wirkungsverbindung stehende Schwenkwelle in Wirkungsverbindung steht, über einen Flaschenzug erfolgt. Ähnliche Möbelantriebe sind auch durch FR 2727296, DE 3409223 C2, DE 19843259 C1, GB 2334435 und US 5528948 bekannt.

Darüber hinaus sind Lattenroste bekannt, bei denen die Verstelleinrichtung zur Verstellung eines Stützteiles teilweise oder vollständig in einen Grundkörper des Lattenrostes integriert ist. In diesem Sinne zeigt und beschreibt DE 19962541 C2 (entsprechend EP 1239755 B1, JP 2001-546280 und US 6754922) eine motorisch verstellbare Stützeinrichtung, die ein zueinander parallele Längsholme aufweisendes erstes Stützteil aufweist, das bei der aus der Druckschrift bekannten Stützeinrichtung durch ein ortsfestes mittleres Stützteil gebildet ist. Die bekannte Stützeinrichtung weist ferner weitere Stützteile auf, die durch Antriebsmittel relativ zu dem ersten Stützteil verstellbar sind. Bei der aus der Druckschrift bekannten Stützeinrichtung ist ein erster Längsholm des ersten Stützteiles zur Aufnahme der Antriebsmittel als Hohlprofil ausgebildet, wobei der gesamte Antrieb einschließlich eines Antriebsmotors in dem hohlen Längsholm aufgenommen ist. Aufgrunddessen steht der Antriebsmotor in Vertikalrichtung des ersten Längsholmes nicht über denselben hervor, so dass die aus der Druckschrift bekannte Stützeinrichtung eine äußerst geringe Bauhöhe aufweist. Eine ähnliche Stützeinrichtungist auch durch DE 10046751 (entsprechend EP 1239754 B1, JP 2001-547994 und US 6961971) bekannt.

Durch WO 96/29970 ist eine motorisch verstellbare Stützeinrichtung für eine Matratze eines Bettes bekannt, die mehrere in Längsrichtung der Stützeinrichtung aufeinanderfolgende Stützteile aufweist, die durch Antriebsmittel relativ zu einem ersten Stützteil verschwenkbar sind. Die Stützteile sind an einem äußeren Rahmen gelagert, dessen Profilhöhe wesentlich größer ist als die Profilhöhe der Stützteile. Bei der aus der Druckschrift bekannten Stützeinrichtung sind Teile des äußeren Rahmens als Hohlprofil ausgebildet, wobei in dem Hohlprofil Teile des Antriebsmittels zur Vestellung der Stützteile relativ zueinander aufgenommen sind. Der Antriebsmotor ist an einer Innenseite eines Teiles des äußeren Rahmens angeordnet.

Durch DE 69507158 T2 (entsprechend EP 0788325 B1) ist eine motorisch verstellbare Stützeinrichtung für eine Matratze eines Bettes bekannt, die ein einen Längsholm aufweisendes erstes Stützteil und wenigstens ein zweites Stützteil aufweist, das durch Antriebsmittel relativ zu dem ersten Stützteil verschwenkbar ist. Bei der bekannten Stützeinrichtung ist der Antriebsmotor außerhalb der Grundfläche der Stützeinrichtung angeordnet und an einer rahmenartigen Verlängerung des ersten Stützteiles befestigt.

Durch EP 1633219 B1 ist ein Lattenrost bekannt, bei der in einem hohlen Längsholm Teile der Verstelleinrichtung aufgenommen sind, während der Antriebsmotor außerhalb des Längsholmes angeordnet ist und durch eine Ausnehmung hindurch mit den in dem Längsholm aufgenommenen Teilen der Verstelleinrichtung in Antriebsverbindung steht.

Durch WO 2008/113401 ist ein zum Verstellen einer Schublade relativ zu einem Korpus eines Schrankes vorgesehener Möbelantrieb bekannt, bei dem die Verstellung der Schublade über eine biegsame Zahnstange erfolgt, die in Eingriff mit einem Zahnrad steht.

Durch DE 10 2008 028586 A1 ist ein Lattenrost mit integrierter Verstelleinrichtung bekannt, bei dem die Kraftübertragung von Antriebsmotoren der Verstelleinrichtung auf die zu verstellenden Stützteile über Zugseile erfolgt, die über Umlenkungen geführt sind.

Elektromotorisch verstellbare Lattenroste weisen in der Regel einen Verstellbeschlag auf, der dazu dient, die Verstellkraft von einem Elektromotor oder mehreren Elektromotoren auf die zueinander verstellbaren Stützteile des Lattenrostes zu übertragen. Zur Montage eines elektromotorisch verstellbaren Lattenrostes wird beispielsweise ein Doppelantrieb an dem Lattenrost so montiert, dass seine Verstellorgane in Wirkungsverbindung mit dem Verstellbeschlag des Lattenrostes treten.

Der Erfindung liegt die Aufgabe zugrunde, eine elektromotorisch verstellbare Stützeinrichtung der im Oberbegriff des Anspruchs 1 genannten Art anzugeben, die eine relativ geringe Bauhöhe aufweist und deren Montage vereinfacht ist.

Diese Aufgabe wird durch die im Anspruch 1 angegebene Erfindung gelöst.

Der Grundgedanke der Erfindung besteht darin, die Verstellmechanik einer elektromotorisch verstellbaren Stützeinrichtung so auszugestalten, dass die Stützeinrichtung eine geringe Bauhöhe aufweist, also flach ausgebildet ist. Hierzu sieht die Erfindung vor, dass wenigstens ein Verstellorgan ein Aufstellhebel ist, der unter der Zugwirkung des Zugseiles eines Bowdenzuges aufstellbar ist.

Entsprechende Verstellhebel und Bowdenzüge stehen als relativ einfache und kostengünstige Standardbauteile zur Verfügung, so dass die erfindungsgemäße Stützeinrichtung gleichzeitig relativ einfach und damit kostengünstig herstellbar ist.

Die Verwendung eines Aufstellhebels in Kombination mit einem Bowdenzug stellt hinsichtlich der Bauhöhe einer elektromotorisch verstellbaren Stützeinrichtung, beispielsweise eines elektromotorisch verstellbaren Lattenrostes, eine glücklichen Griff dar.

Grundsätzlich kann der Aufstellhebel mit einem zu verstellenden Stützteil der Stützeinrichtung verbunden sein, beispielsweise über eine Kulissenführung oder auf andere Weise. Erfindungsgemäß ist jedoch vorgesehen, dass der Aufstellhebel zur losen Beaufschlagung eines zu verstellenden Stützteiles ausgebildet und eingerichtet ist.

Form, Größe und Ausgestaltung des Aufstellhebels sind entsprechend den jeweiligen Anforderungen innerhalb weiter Grenzen wählbar.

Eine außerordentlich vorteilhafte Weiterbildung der Erfindung sieht vor, dass das Verstellorgan ein erster Aufstellhebel ist, der um eine erste Schwenkachse verschwenkbar aufstellbar ist, wobei das der ersten Schwenkachse abgewandte Ende des ersten Aufstellhebels gelenkig und um eine zu der ersten Schwenkachse parallele zweite Schwenkachse verschwenkbar mit einem zweiten Aufstellhebel verbunden ist, der mit dem Zugseil des Bowdenzuges wirkungsverbunden ist, derart, dass sich die Aufstellhebel unter der Zugwirkung des Zugseiles des Bowdenzuges aufstellen. Diese Ausführungsform hat den Vorteil, dass sich aufgrund der Festlegung des Zugseiles des Bowdenzuges an dem zweiten Aufstellhebel hinsichtlich der Kinematik einer durch den ersten Aufstellhebel und den zweiten Aufstellhebel gebildeten Aufstellhebel-Anordnung weitergehende Freiheiten bieten.

Eine andere vorteilhafte Weiterbildung der Erfindung sieht vor, dass dem ersten Aufstellhebel ein Anschlag zugeordnet ist, derart, dass der erste Aufstellhebel beim Anliegen seines freien Endes um die erste Schwenkachse verschwenkt. Bei dieser Ausführungsform kann der erste Aufstellhebel beispielsweise zunächst eine translatorische Bewegung ausführen, die beim Auflaufen auf den Anschlag in eine Schwenkbewegung und damit in eine Verstellbewegung eines zugeordneten zu verstellenden Stützteiles übergeht.

Eine außerordentlich vorteilhafte Weiterbildung der Ausführungsform mit dem ersten und dem zweiten Aufstellhebel sieht vor, dass die durch den ersten Aufstellhebel und den zweiten Aufstellhebel gebildete Aufstellhebel-Anordnung in einer ersten kinematischen Phase an oder in einer Führung linear verschieblich ist, wobei in der ersten kinematischen Phase die erste Schwenkachse und die zweite Schwenkachse sowie ein Kraftangriffspunkt des Zugseiles des Bowdenzuges an dem zweiten Aufstellhebel im Wesentlichen in einer Ebene liegen. Bei dieser Ausführungsform wirkt die Zugkraft des Zugseiles des Bowdenzuges in der ersten kinematischen Phase genau in einer Ebene, in der die Schwenkachsen und der Kraftangriffspunkt des Zugseiles des Bowdenzuges an dem zweiten Aufstellhebel liegen. Auf diese Weise führt die Aufstellhebel-Anordnung in der ersten kinematischen Phase ausschließlich eine translatorische Bewegung aus. Der Hub dieser translatorischen Bewegung ist dabei entsprechend den jeweiligen Anforderungen wählbar. Es ist erfindungsgemäß auch möglich, dass der Hub dieser translatorischen Bewegung kurz oder null oder nahezu null ist, sodass die zweite kinematische Phase unmittelbar nach Beginn der Verstellbewegung eingeleitet werden kann.

Eine andere vorteilhafte Weiterbildung der Erfindung sieht vor, dass das der ersten Schwenkachse zugewandte freie Ende des ersten Aufstellhebels insbesondere am Ende der ersten kinematischen Phase auf eine Hubführung aufläuft, derart, dass das freie Ende des ersten Aufstellhebels angehoben wird, insbesondere in einer zweiten kinematischen Phase. Durch das Anheben des freien Endes des ersten Schwenkhebels liegt die zweite Schwenkachse bei dieser Ausführungsform nicht mehr in einer Ebene mit der ersten Schwenkachse und dem Kraftangriffspunkt des Zugseiles des Bowdenzuges an dem zweiten Schwenkhebel, sodass sich die Aufstellhebel unter der Zugwirkung des Zugseiles des Bowdenzuges aufstellen.

Eine andere vorteilhafte Weiterbildung der Erfindung sieht vor, dass das freie Ende des ersten Aufstellhebels auf einen Anschlag aufläuft, insbesondere am Ende der zweiten kinematischen Phase, derart, dass der erste Aufstellhebel beim Anliegen seines freien Endes an dem Anschlag um die erste Schwenkachse verschwenkt, insbesondere in einer dritten kinematischen Phase. Bei dieser Ausführungsform führt der erste Aufstellhebel ausschließlich eine Aufstellbewegung und damit eine Schwenkbewegung aus, während er an dem Anschlag anliegt.

Eine andere vorteilhafte Weiterbildung der Erfindung sieht vor, dass dem ersten Aufstellhebel Verriegelungsmittel zugeordnet sind, die in einer vorbestimmten Aufstelllage des ersten Aufstellhebels wirksam werden und den ersten Aufstellhebel gegen eine translatorische Bewegung verriegeln, gleichzeitig eine Aufstellbewegung des ersten Aufstellhebels zulassen. Auf diese Weise ist bei einer Rückstellung aus einer maximal verstellten Lage in Richtung auf die unverstellte Lage ein gleichmäßiges Absenken der Aufstellhebel-Anordnung sichergestellt.

Eine vorteilhafte Weiterbildung der vorgenannten Ausführungsform sieht vor, dass die Verriegelungsmittel wirksam werden, wenn der erste Aufstellhebel an dem Anschlag anliegend und verschwenkend eine vorbestimmte Aufstelllage erreicht.

Um die Verriegelung besonders einfach zu gestalten, sieht eine vorteilhafte Weiterbildung der Ausführungsform mit den Verriegelungsmitteln vor, dass dieselben wenigstens einen Lagerzapfen aufweisen, der derart ausgebildet und eingereichtet ist, dass er in Verriegelungsposition drehbar in einer Lagerausnehmung gelagert ist und in einer Entriegelungsposition aus der Lagerausnehmung freikommt.

Eine vorteilhafte Weiterbildung der vorgenannten Ausführungsform sieht vor, dass der Lagerzapfen einen zur Schwenklagerung dienenden, im Querschnitt kreisförmigen Abschnitt und eine Abflachung aufweist, wobei der Lagerzapfen in einer an dem Anschlagselement gebildeten Nut translatorisch geführt ist, die in eine im Querschnitt abschnittsweise kreisförmig ausgebildete Lagerfläche mündet, deren Durchmesser größer ist als die lichte Weite der Nut.

Die Erfindung wird nachfolgend anhand eines Ausführungsbeispieles unter Bezugnahme auf die beigefügte Zeichnung näher erläutert. Dabei bilden alle beschriebenen, in der Zeichnung dargestellten und in den Patentansprüchen beanspruchten Merkmale für sich genommen sowie in beliebiger geeigneter Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1:: in einer Perspektivansicht ein Ausführungsbeispiel einer erfindungsgemäßen elektromotorisch verstellbaren Stützeinrichtung in Form eines Lattenrostes in einer unverstellten Position,
- Fig. 2:: in gleicher Darstellung wie Fig. 1 den Lattenrost gemäß Fig. 1, wobei der Übersichtlichkeit halber Stützteile des Lattenrostes weggelassen sind,
- Fig. 3: in gleicher Darstellung wie Fig. 1 einen Montagerahmen der Stützeinrichtung gemäß Fig. 1,
- Fig. 4: in gleicher Darstellung wie Fig. 3 den Montagerahmen gemäß Fig. 3 zusammen mit einen daran schwenkbar gelagerten Stützteil,
- Fig. 5: in einer Perspektivdarstellung eine Antriebseinheit des Lattenrostes gemäß Fig. 1, wobei das Gehäuse der Antriebseinheit aus Darstellungsgründen offen gezeigt und der Übersichtlichkeit halber Bestandteile der Antriebseinheit weggelassen sind,
- Fig. 6: in gleicher Darstellung wie Fig. 5, jedoch in vergrößertem Maßstab die Antriebseinheit gemäß Fig. 5,
- Fig. 7A- Fig. 7E: jeweils in einer Perspektivansicht Einzelheiten eines Verstellorganes des Lattenrostes gemäß Fig. 1 in verschiedenen Verstellpositionen bzw. kinematischen Phasen,
- Fig. 8: in einer Perspektivansicht und in gegenüber Fig. 7 vergrößertem Maßstab ein Anschlagselement des Lattenrostes gemäß Fig. 1,
- Fig. 9: in gleicher Darstellung wie Fig. 8 das Anschlagselement gemäß Fig. 8 in Kombination mit einem Aufstellhebel,
- Fig. 10: in gleicher Darstellung wie Fig. 9 das Anschlagselement und den Aufstellhebel gemäß Fig. 9 in einer anderen kinenmatischen Phase,
- Fig. 11A- Fig. 11E: jeweils in einer anderen Perspektivansicht den Montagerahmen gemäß Fig. 3 in unterschiedlichen Verstellpositionen bzw. kinematischen Phasen,
- Fig. 12A- Fig. 12E: in gleicher Darstellung wie Fig. 11, jedoch in geringfügig verkleinertem Maßstab den Verstellrahmen gemäß Fig. 3 in unterschiedlichen Verstellpositionen bzw. kinematischen Phasen in Kombination mit einem zu verstellenden Stützteil,
- Fig. 13: in einer Perspektivdarstellung den ersten Aufstellhebel für sich genommen und
- Fig. 14: in einer Perspektivdarstellung das Anschlagselement für sich genommen.

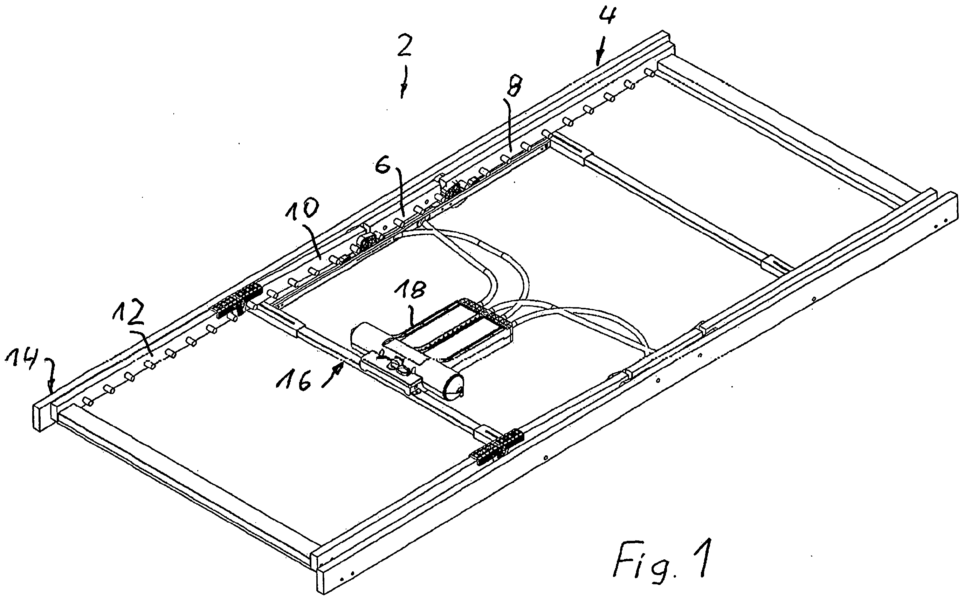

In Fig. 1 ist in einer Perspektivdarstellung ein Ausführungsbeispiel einer erfindungsgemäßen elektromotorisch verstellbaren Stützeinrichtung für eine Polsterung eines Sitz- und/oder Liegemöbels, insbesondere eine Matratze eines Bettes, dargestellt, wobei die Stützeinrichtung bei diesem Ausführungsbeispiel als Lattenrost 2 ausgebildet ist. Der Übersichtlichkeit halber sind federnde Latten des Lattenrostes 2 beispielsweise Federhölzer, in der Zeichnung nicht dargestellt. Die Ausgestaltung und Anbringung derartiger federnder Latten ist dem Fachmann jedoch allgemein bekannt und wird daher nicht näher erläutert.

Der Lattenrost 2 weist einen Grundkörper 4 auf, an dem relativ zueinander verstellbare Stützteile angeordnet sind. Bei dem dargestellten Ausführungsbeispiel weisen die Stützteile ein ortsfestes mittleres Stützteil 6 auf, mit dessen einem Ende gelenkig und um eine horizontale Schwenkachsen verschwenkbar ein Oberkörperstützteil 8 verbunden ist. Mit dem dem Oberkörperstützteil 8 abgewandten Ende des mittleren Stützteiles 6 ist gelenkig und um eine horizontale Schwenkachse verschwenkbar ein Beinstützteil 10 verbunden, mit dessen dem mittleren Stützteil 6 abgewandten Ende gelenkig und um eine horizontale Schwenkachse verschwenkbar ein Wadenstützteil 12 verbunden ist.

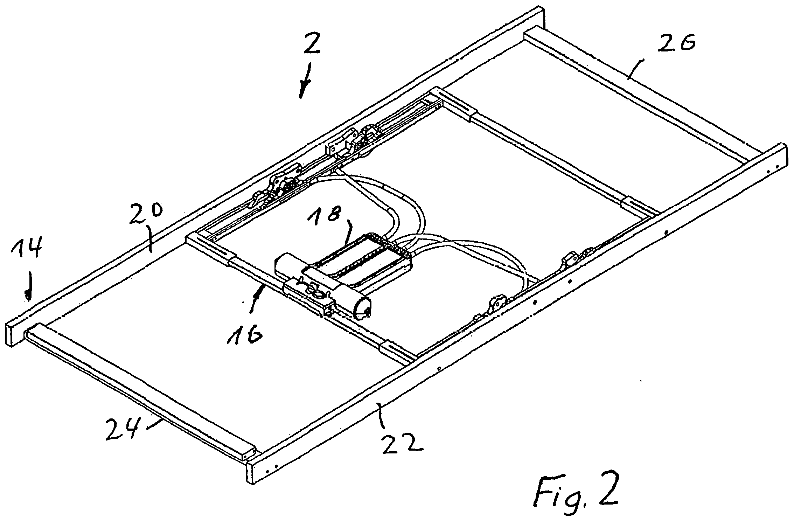

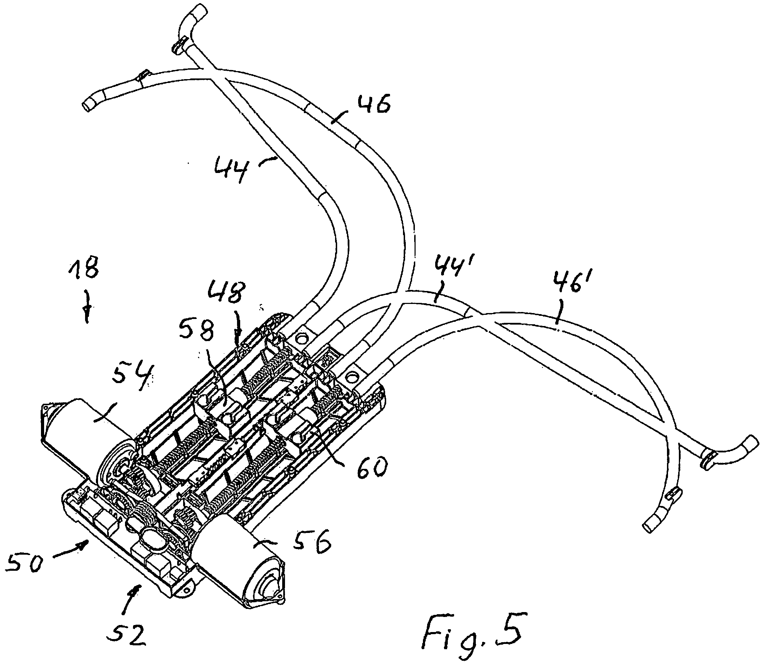

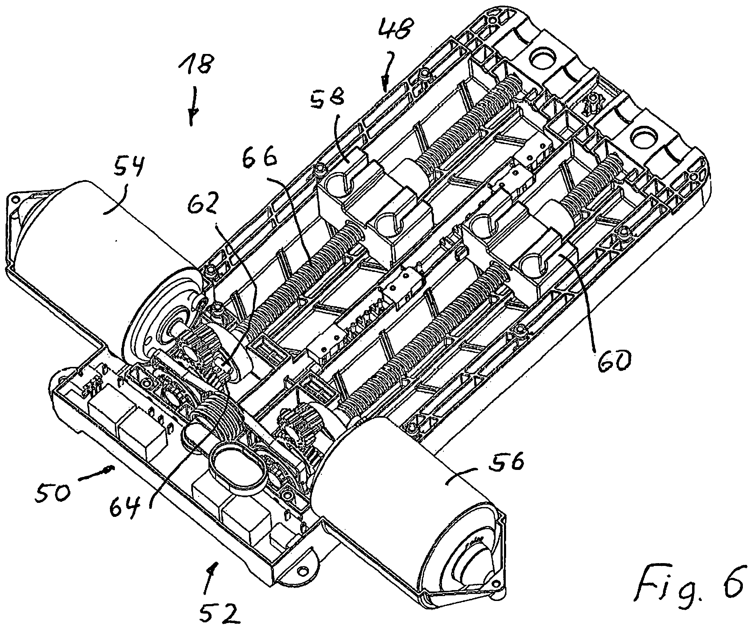

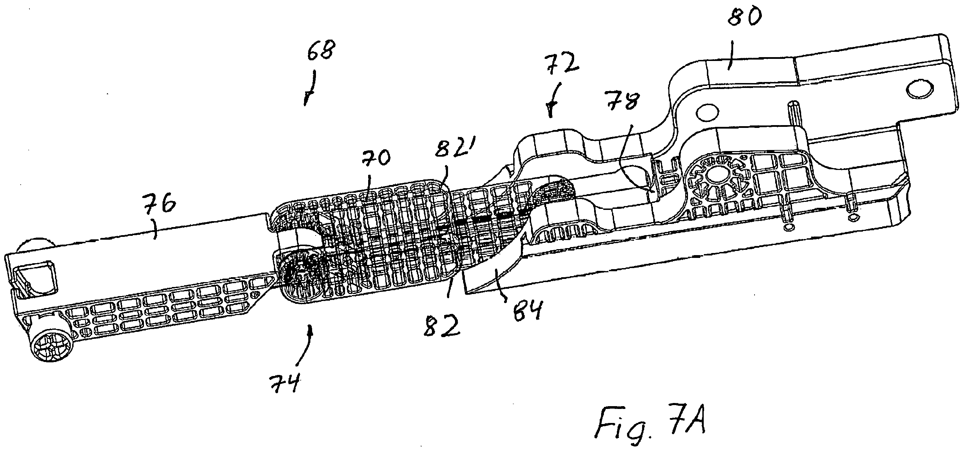

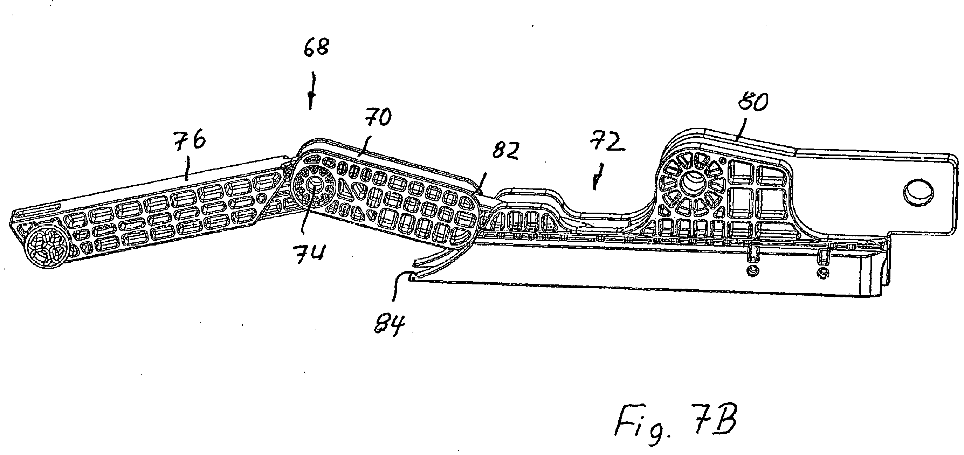

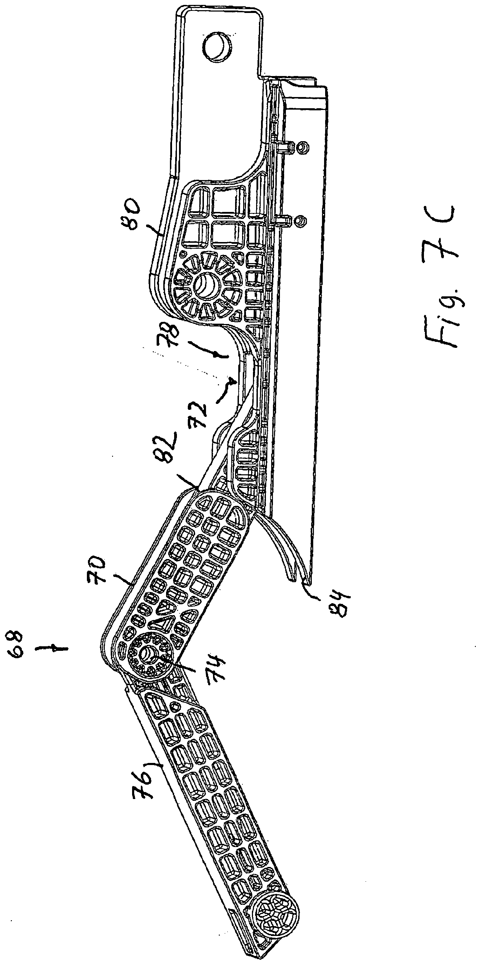

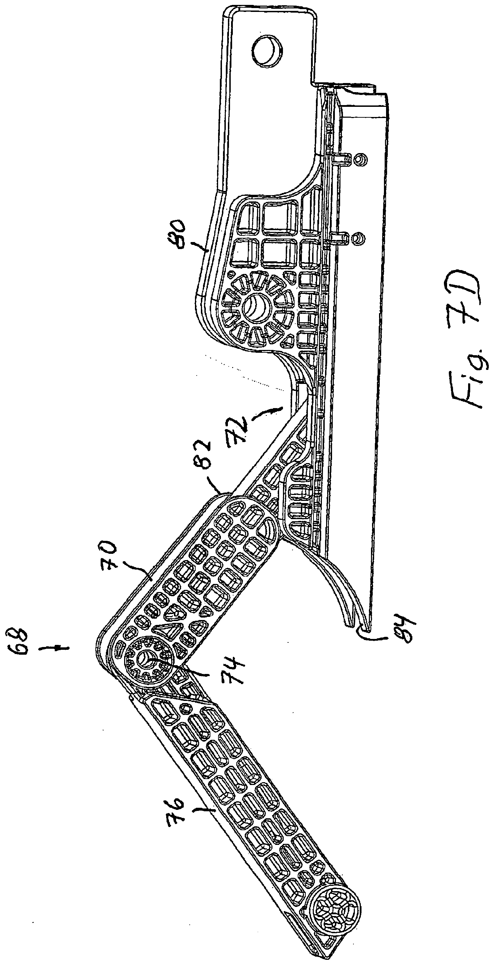

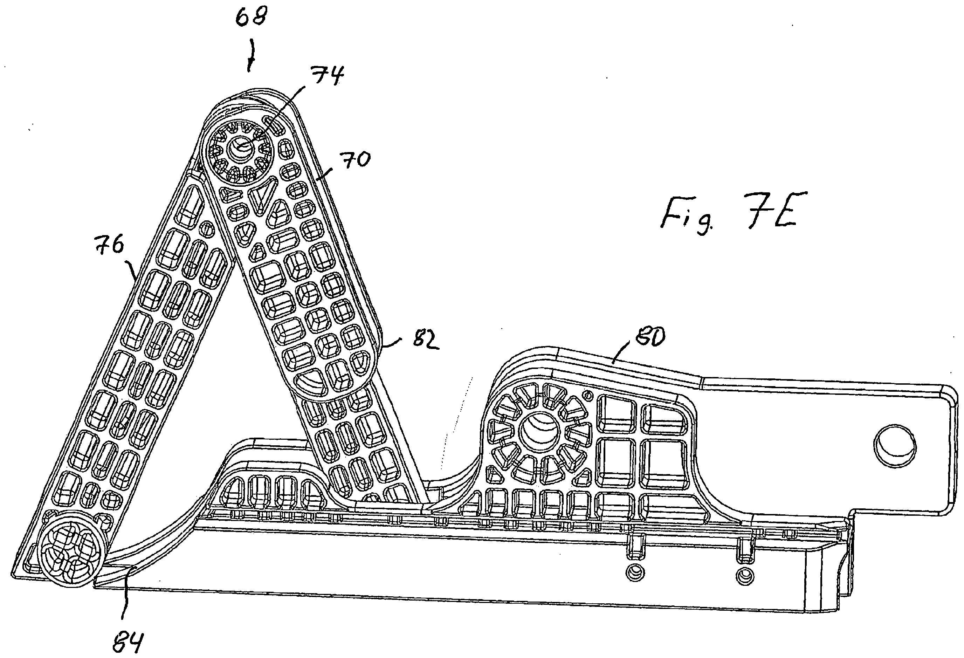

Bei dem dargestellten Ausführungsbeispiel weist der Grundkörper des Lattenrostes 4 einen Außenrahmen 14 auf. Die Stützteile 6 bis 12 sind mit dem Außenrahmen 14 über einen erfindungsgemäßen Montagerahmen 16 verbunden, an dem eine Antriebseinheit 18 sowie von der Antriebseinheit mit einer Verstellkraft beaufschlagte oder beaufschlagbare Verstellorgane angeordnet sind zur Beaufschlagung eines zu verstellenden Stützteiles mit einer Verstellkraft in Montageposition des Montagerahmens 16. Der Montagerahmen 16 wird weiter unten anhand der Figuren 2 bis 4 näher erläutert. Die Antriebseinheit 18 wird weiter unten anhand der Figuren 5 und 6 näher erläutert. Verstellorgane des Montagerahmens 16 sind bei dem dargestellten Ausführungsbeispiel durch Aufstellhebel gebildet, die weiter unten anhand der Figuren 7 bis 10 näher erläutert werden.

Fig. 2 zeigt den Außenrahmen 14 des Lattenrostes 2 mit daran befestigtem Montagerahmen 16, wobei die Stützteile 6 bis 12 in Fig. 2 der Übersichtlichkeit halber weggelassen sind. Wie aus Fig. 2 ersichtlich ist, weist der Außenrahmen 14 seitlich zueinander beabstandete, sich in Längsrichtung des Lattenrostes 2 erstreckende Längsholme 20, 22 auf, die im Bereich ihrer Enden über Querholme 24, 26 miteinander verbunden sind. Im Kontext der Erfindung ist als Längsrichtung des Lattenrostes 2 diejenige Richtung definiert, entlang derer der Lattenrost 2 die größere Ausdehnung aufweist. Dementsprechend ist die Querrichtung des Lattenrostes 2 als diejenige Richtung definiert, entlang derer der Lattenrost 2 die geringere Ausdehnung aufweist.

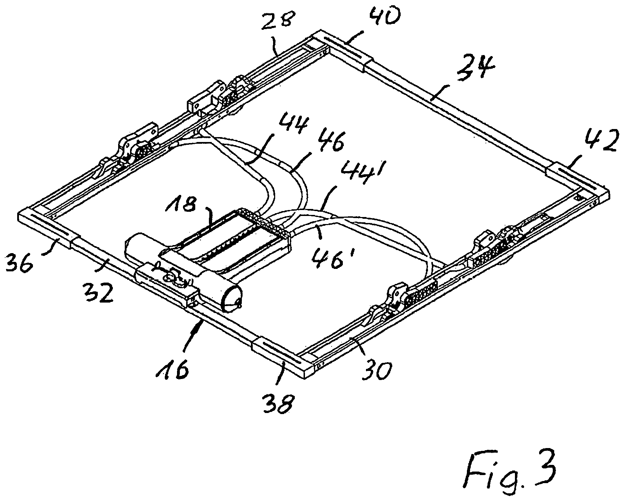

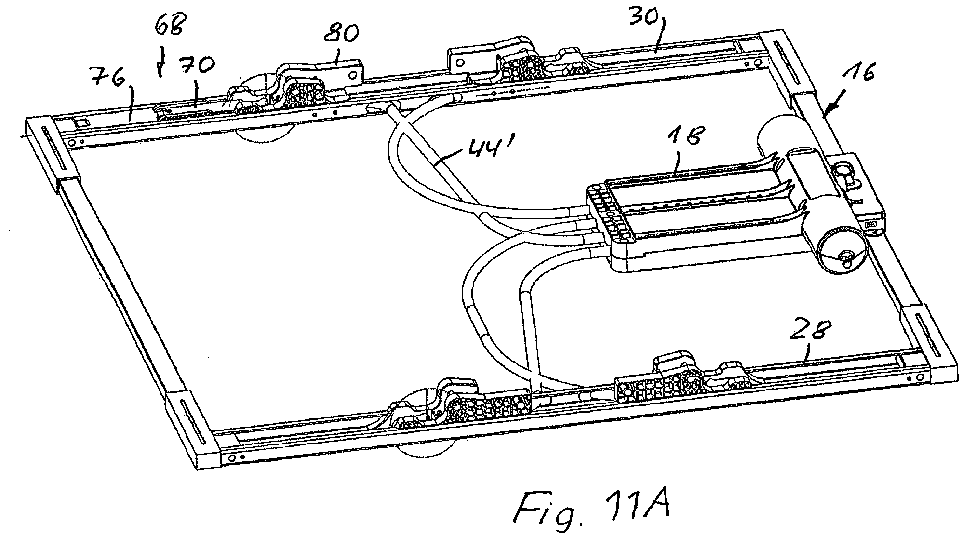

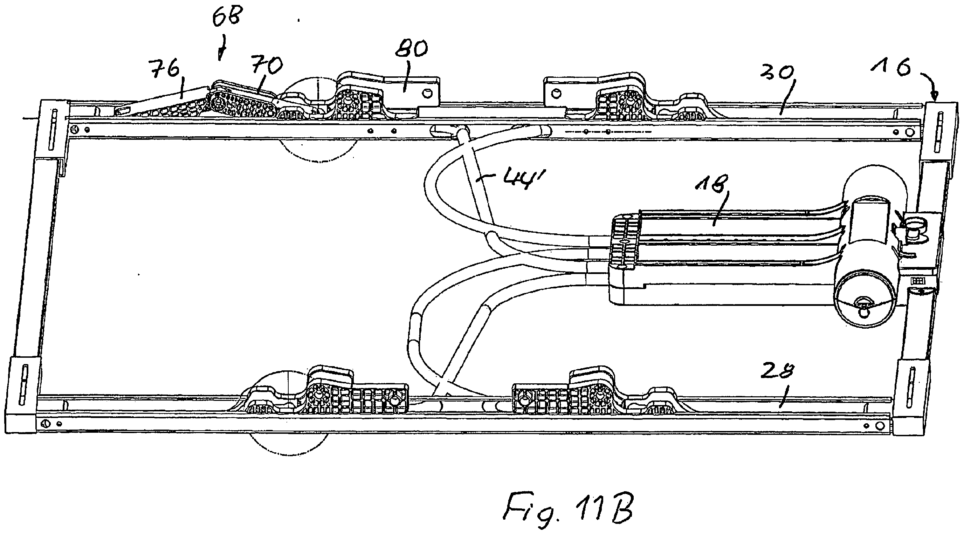

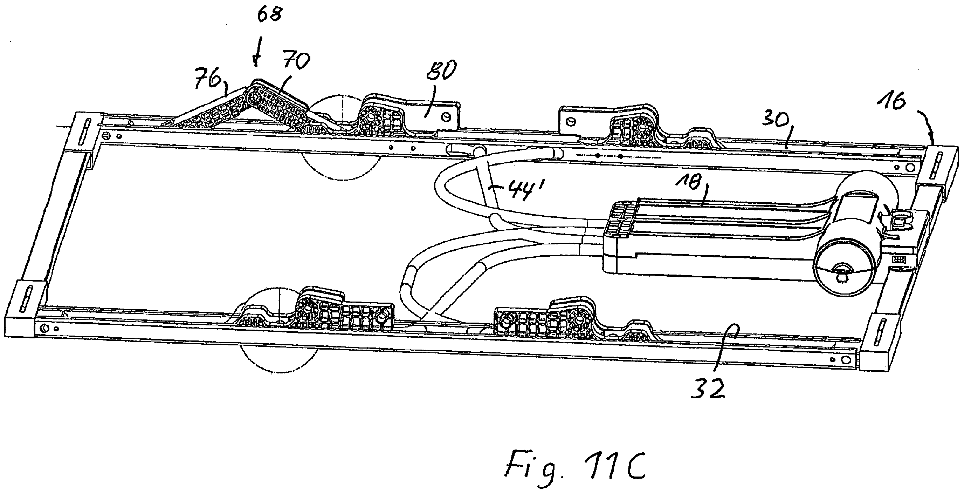

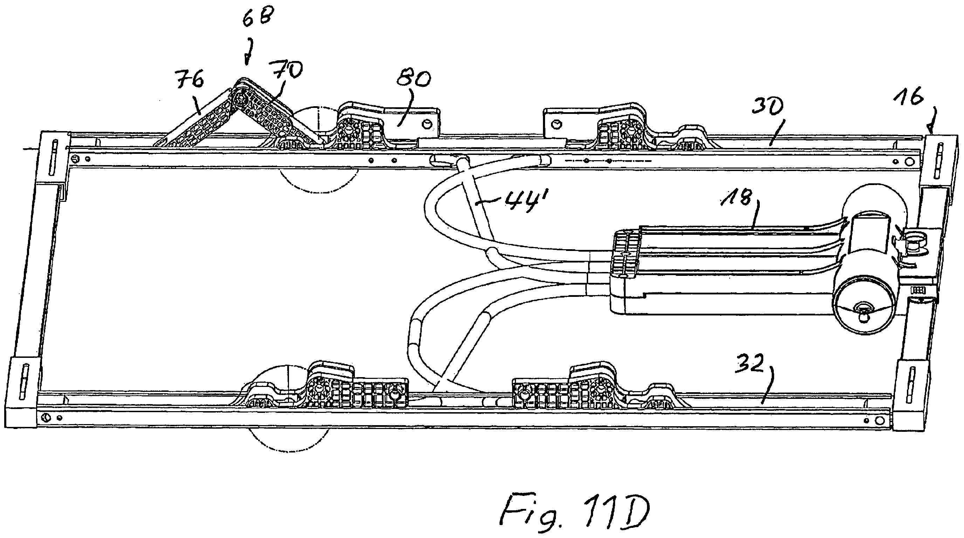

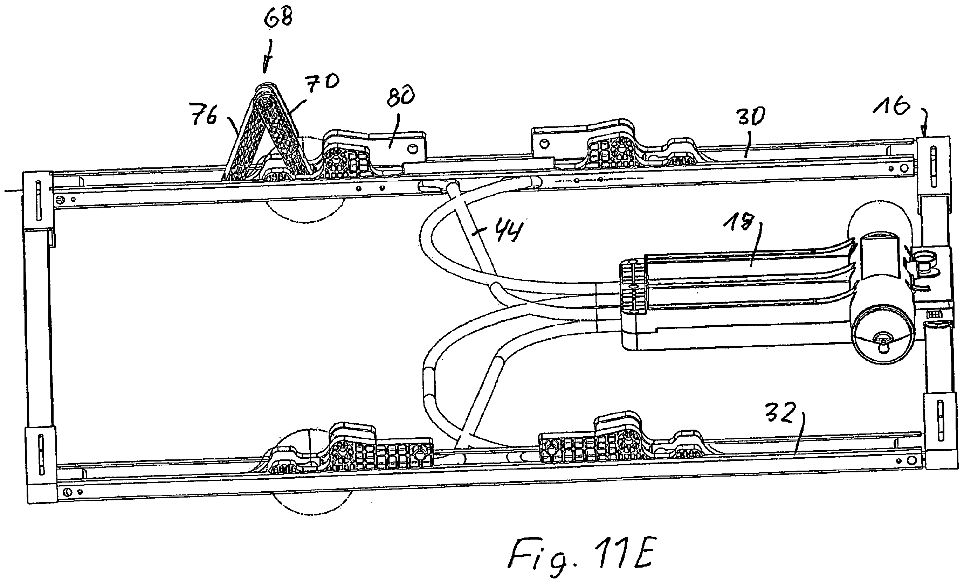

Fig. 3 zeigt den Montagerahmen 16 für sich genommen, also unabhängig von dem Lattenrost 2. Der Montagerahmen 16 weist Längsholme 28, 30 auf, die im Bereich ihrer Enden über Querholme 32, 34 miteinander verbunden sind. Bei dem dargestellten Ausführungsbeispiel sind die Querholme 32, 34 jeweils durch eine Profilschiene gebildet, die den Querschnitt eines liegenden C hat und in der Verstellorgane des Montagerahmens 16 angeordnet bzw. geführt sind, wie dies weiter unten anhand von Fig. 11 näher erläutert wird.

Bei dem dargestellten Ausführungsbeispiel ist der Montagerahmen 16 zur Anpassung an Lattenroste unterschiedlicher Breite breitenverstellbar ausgestaltet. Zur Realisierung der Breitenverstellbarkeit sind an den Längsholmen 28, 30 des Montagerahmens 16 jeweils sich in Richtung auf den anderen Längsholm 30, 28 erstrekkende Teleskopelemente 36, 38 bzw. 40, 42 angeordnet, die bei dem dargestellten Ausführungsbeispiel als Rohrteile ausgebildet sind und sich im rechten Winkel zu den Längsholmen 28 bzw. 30 erstrecken. In den Teleskopelementen 36, 38 sind bei dem dargestellten Ausführungsbeispiel die Enden des Querholmes 32 teleskopierend geführt. In hierzu entsprechender Weise sind in Teleskopelementen 40, 42 die Enden des Querholmes 34 teleskopierend geführt.

Bei dem dargestellten Ausführungsbeispiel ist die Antriebseinheit 18 an dem Querholm 32 angeordnet und in Holmrichtung des Querholmes 32 verschiebbar und in der jeweiligen Position arretierbar.

Zur Kraftübertragung von Elektromotoren der Antriebseinheit 18 auf die zu verstellenden Stützteile 6 bis 12 sind bei dem dargestellten Ausführungsbeispiel Bowdenzüge 44, 44' und 46, 46' vorgesehen, von denen jeder einem Verstellorgan zugeordnet ist. Das Zusammenwirken der Bowdenzüge 44, 44', 46, 46' mit der Antriebseinheit 18 und den Verstellorganen wird weiter unten anhand der Figuren 5 bis 7 näher erläutert.

Zur Montage des Montagerahmens 18 an dem Außenrahmen 14 des Lattenrostes 2 wird zunächst die Breite des Montagerahmens 16 (vgl. Fig. 3) entsprechend der Breite des Außenrahmens 14 (vgl. Fig. 2) des Lattenrostes 2 eingestellt. Im Einzelnen werden die Längsholme 28, 30 des Montagerahmens 16 so weit auseinandergezogen, dass der Abstand der Außenflächen der Längsholme 28, 30 des Montagerahmens der lichten Weite zwischen den Innenflächen der Längsholme 20, 22 des Außenrahmens 14 entspricht. Hierbei gleiten die Querholme 32, 34 des Montagerahmens 16 in den Teleskopelementen 36, 38 bzw. 40, 42. Nach Einstellung der gewünschten Breite wird der Montagerahmen 16 in den Außenrahmen eingesetzt, wie in Fig. 2 dargestellt. Daran anschließend kann der Montagerahmen 16 an dem Außenrahmen 14 befestigt werden, beispielsweise durch Verschrauben.

Nach der Montage des Montagerahmens 16 an dem Außenrahmen 14 können die Stützteile 6 bis 14 des Lattenrostes 2 mit dem Montagerahmen 16 verbunden werden.

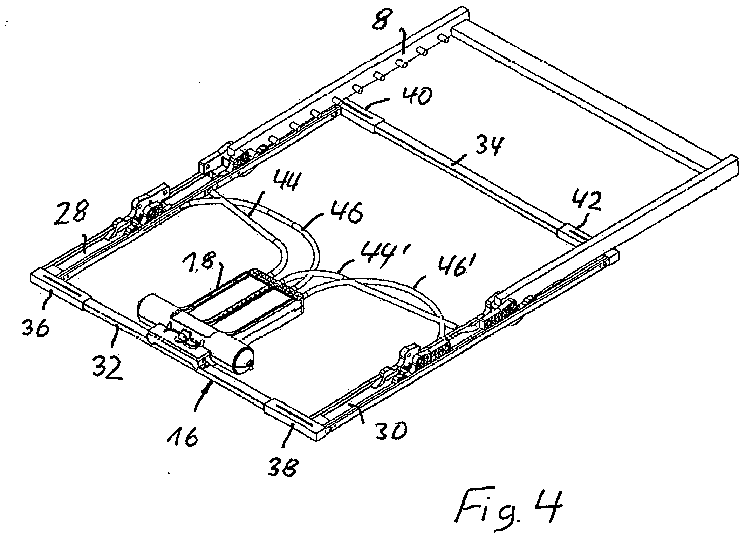

Fig. 4 zeigt exemplarisch eine Verbindung des Oberkörperstützteiles 8 mit dem Montagerahmen 16. Die Verbindung des Beinstützteiles 10 nebst damit verbundenem Wadenstützteil 12 erfolgt auf entsprechende Weise und wird daher hier nicht näher erläutert. Zur Verbindung mit dem Oberkörperstützteil 8 ist an dem Montagerahmen eine Lagerungseinrichtung zur schwenkbaren Lagerung wenigstens eines schwenkverstellbaren Stützteiles gebildet, wobei die Lagerungseinrichtung bei dem dargestellten Ausführungsbeispiel seitlich zueinander beabstandete Lagerbuchsen aufweist, in die das Oberkörperstützteil 8 mit seitlich zueinander beabstandeten Lagerzapfen einsetzbar ist. Fig. 4 zeigt das auf diese Weise schwenkbar an dem Montagerahmen 16 montierte Oberkörperstützteil 8.

Fig. 5 zeigt die Antriebseinheit 18 in einer Perspektivansicht, wobei das Gehäuse 48 der Antriebseinheit 18 aus Darstellungsgründen offen gezeigt ist. Die Antriebseinheit 18 weist zwei Antriebsstränge 50, 52 auf, denen jeweils ein Elektromotor 54 bzw. 56 zugeordnet ist und deren Abtriebsglied jeweils durch Spindelmuttern 58, 60 gebildet ist. Die Ummantelungen der Bowdenzüge 44, 44' und 46, 46' sind an dem Gehäuse 48 der Antriebseinheit 18 festgelegt, während die Zugseile der Bowdenzüge paarweise an den Spindelmuttern 58, 60 festgelegt sind. Bei dem dargestellten Ausführungsbeispiel sind die Zugseile der Bowdenzüge 44, 44' an der Spindelmutter 58 festgelegt, während die Zugseile der Bowdenzüge 46, 46' an der Spindelmutter 60 festgelegt sind. Die Elektromotoren 54, 56 sind unabhängig voneinander ansteuerbar. Ansteuerungsmittel zur Ansteuerung der Elektromotoren 54, 56 sind aus Gründen der Übersichtlichkeit in der Zeichnung nicht dargestellt. Das gleiche gilt für Spannungsversorgungsmittel, die aus Gründen der Übersichtlichkeit ebenfalls nicht dargestellt sind.

Fig. 6 zeigt die Antriebseinheit 18 gemäß Fig. 5, wobei aus Gründen der Übersichtlichkeit die Bowdenzüge 44, 44 und 46, 46' weggelassen sind. Nachfolgend werden der Antriebsstrang 50 und seine Funktionsweise näher erläutert. Der Antriebsstrang 52 ist entsprechend aufgebaut und wird daher nicht näher erläutert.

Der Elektromotor 54 des Antriebsstranges 50 weist eine als Schnecke eines Schneckentriebs ausgebildete Abtriebswelle 62 auf, die in Eingriff mit einem Schnekkenrad 64 steht, das drehfest mit einer in dem Gehäuse 48 drehbar gelagerten Gewindespindel 66 verbunden ist. Bei dem dargestellten Ausführungsbeispiel sind die Schnecke 62 und das Schneckenrad 64 Bestandteil einer Getriebeanordnung, die, wie aus Fig. 6 ersichtlich ist, noch weitere Getriebeelemente aufweist, die jedoch in dem vorliegenden Kontext nicht weiter interessieren und daher nicht näher erläutert werden.

Auf der Gewindespindel 66 ist verdrehsicher und in Axialrichtung beweglich die Spindelmutter 58 angeordnet, an der die Bowdenzüge 44, 44' (in Fig. 6 nicht dargestellt) festgelegt sind. Zum Verstellen eines Stützteiles treibt der Elektromotor 54 die Gewindespindel 66 derart an, dass sich die Spindelmutter 58 in Fig. 6 nach links bewegt, so dass die Spindelmutter 58 an den Zugseilen der Bowdenzüge 44, 44' zieht. Die Zugwirkung an den Zugseilen der Bowdenzüge 44, 44' wird in weiter unten anhand von Fig. 7 näher erläuterter Weise in eine Aufstellbewegung eines Aufstellhebels umgesetzt, der ein Verstellorgan des Montagerahmens 16 bildet. Eine Rückstellung in die unverstellte Position des Lattenrostes (vgl. Fig. 1) erfolgt bei eingeschaltetem Elektromotor 54, jedoch unter der Gewichtskraft des Stützteiles, ggf. zusätzlich unter der Last einer auf dem Lattenrost ruhenden Person.

Fig. 7A zeigt eine Aufstellhebel-Anordnung 68, die einen ersten Aufstellhebel 70 aufweist, der das Verstellorgan des an dem Montagerahmen 16 angeordneten Möbelantriebs bildet und unter der Zugwirkung des Zugseiles eines Bowdenzuges aufstellbar ist, bei dem dargestellten Ausführungsbeispiel unter der Zugwirkung des Zugseiles des Bowdenzuges 44'. Der erste Aufstellhebel 70 ist um eine erste Schwenkachse 72 verschwenkbar aufstellbar, wobei das der ersten Schwenkachse 72 abgewandte Ende des ersten Aufstellhebels gelenkig und um eine zu der ersten Schwenkachse 72 parallele zweite Schwenkachse 74 verschwenkbar mit einem zweiten Aufstellhebel 76 verbunden ist, der mit dem Zugseil des Bowdenzuges 44' wirkungsverbunden ist, derart, dass sich die Aufstellhebel 70, 76 unter der Zugwirkung des Zugseiles des Bowdenzuges aufstellen. Bei dem dargestellten Ausführungsbeispiel ist das Zugseil des in Fig. 7 nicht gezeigten Bowdenzuges an dem dem ersten Aufstellhebel 70 abgewandten Ende des zweiten Aufstellhebels 76 festgelegt.

Bei dem dargestellten Ausführungsbeispiel ist dem ersten Aufstellhebel 70 ein Anschlag 78 zugeordnet, der an einem Anschlagselement 80 gebildet ist, das verschiebefest mit dem Längsholm 30 des Montagerahmens 16 verbunden ist (vgl. Fig. 11A).

Nachfolgend wird die Wirkungsweise der Aufstellhebel-Anordnung 68 näher erläutert, wobei auf die Fig. 7A bis 7E und auf die Fig. 11A bis 11E Bezug genommen wird. Die Fig. 7A bis 7E zeigen ausschließlich die Aufstellhebel-Anordnung 68 in Kombination mit dem Anschlagselement 80, während die Figuren 11A bis 11E zusätzlich den Montagerahmen 16 zeigen. Unter den Fig. 7A bis 7E und 11A bis 11E verdeutlichen Figuren mit gleicher Buchstabenbezeichnung die gleiche kinematische Phase.

Zu Beginn der Verstellbewegung, also bei unverstelltem Lattenrost 2, liegen die Schwenkachsen 72, 74 und ein Kraftangriffspunkt des Bowdenzuges 44' an dem zweiten Aufstellhebel 76 in einer Ebene, so dass sich die Aufstellhebel-Anordnung unter der Zugwirkung des Zugseils des Bowdenzuges 74 translatorisch in Fig. 7A bzw. 11A nach rechts verschiebt. Aus Fig. 11A ist ersichtlich, dass das c-förmige Profil des Längsholmes 30 des Montagerahmens 16 eine Führung für die translatorische Verschiebung der Aufstellhebel-Anordnung 68 bildet. Aufgrund der Tatsache, dass in der ersten kinematischen Phase die erste Schwenkachse 72 und die zweite Schwenkachse 74 sowie der Kraftangriffspunkt des Zugseiles des Bowdenzuges 44 an dem zweiten Aufstellhebel 76 in einer Ebene liegen, wird die Aufstellhebel-Anordnung 68 in der ersten kinematischen Phase ausschließlich translatorisch in Figur 7A bzw. Fig. 11A nach rechts verschoben.

Am Ende der ersten kinematischen Phase läuft der erste Aufstellhebel 70 mit sich seitlich, also in Axialrichtung der ersten Schwenkachse 72 erstreckenden Verdickungen 82, 82' auf eine an dem Anschlagselement 80 gebildete Hubführung 84 auf. Die Hubführung 84 ist bei dem dargestellten Ausführungsbeispiel im Querschnitt bogenförmig ausgebildet. Sie kann jedoch auch als schiefe Ebene ausgebildet sein.

Fig. 7B verdeutlicht, wie das dem zweiten Aufstellhebel 76 abgewandte Ende des ersten Aufstellhebels 70 auf die Hubführung 84 aufläuft und dadurch angehoben wird, was in der Folge unter der Zugwirkung des Zugseilsbowdenzuges 44' zu einem Aufstellen der Aufstellhebel 70, 76 führt. Fig. 11B verdeutlicht die sich dadurch ergebende Aufstellung der Aufstellhebel 70, 76. Wie aus Fig. 7B und aus Fig. 11B erkennbar ist, führt die Aufstellhebel-Anordnung 68 während der zweiten kinematischen Phase gleichzeitig sowohl eine translatorische Bewegung als auch eine Aufstellbewegung aus.

Fig. 7C und Fig. 11C verdeutlichen das Ende der zweiten kinematischen Phase, an dem das dem zweiten Aufstellhebel 76 abgewandte freie Ende des ersten Aufstellhebels 70 auf den an dem Anschlagselement 80 gebildeten Anschlag 78 aufläuft, so dass eine weitere translatorische Bewegung der Aufstellhebel-Anordnung 68 unterbunden ist.

Während einer sich daran anschließenden dritten kinematischen Phase führt der erste Aufstellhebel 70 ausschließlich eine Aufstellbewegung aus, in dem er um die erste Schwenkachse 72 verschwenkt.

Die Figuren 7D und 11D stellen die Aufstellhebel-Anordnung 68 in der dritten kinematischen Phase dar.

Fig. 7E und Fig. 11E zeigen die Aufstellhebel-Anordnung 68 am Ende der dritten kinematischen Phase, in der die Aufstellhebel 70, 76 der Aufstellhebel-Anordnung 68 maximal aufgestellt sind. Die in Fig. 7E und Fig. 11E dargestellte Position der Aufstellhebel-Anordnung 68 entspricht einer maximalen Verstellung des Oberkörperstützteiles 8 relativ zu dem mittleren Stützteil 6.

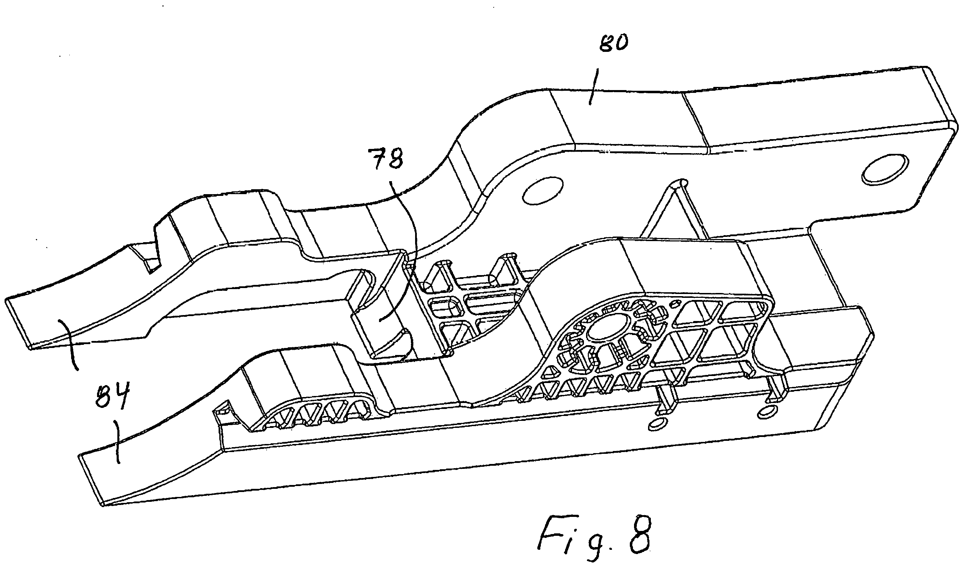

Fig. 8 zeigt eine Perspektivansicht des Anschlagselementes 80 für sich genommen, wobei der Anschlag 78 besonders gut erkennbar ist.

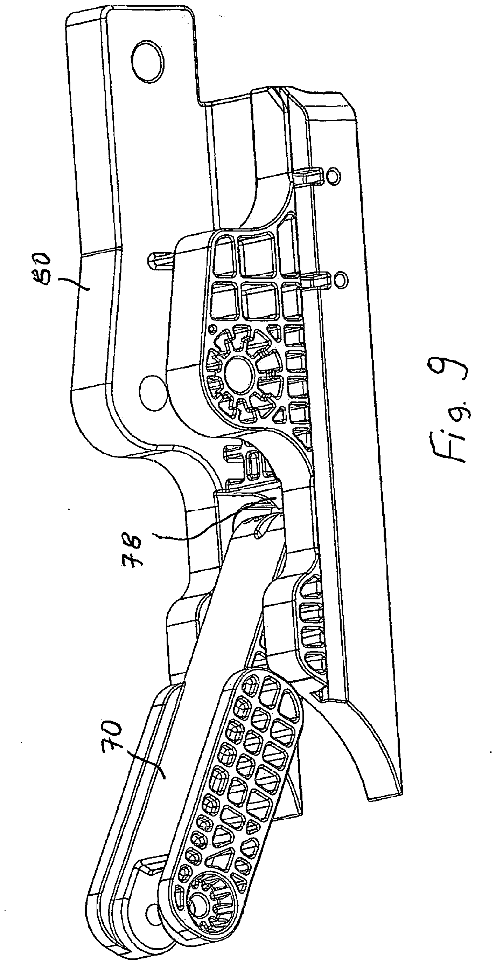

Fig. 9 verdeutlicht das Auflaufen des freien Endes des ersten Aufstellhebels 70 auf den Anschlag 78 am Ende der zweiten kinematischen Phse.

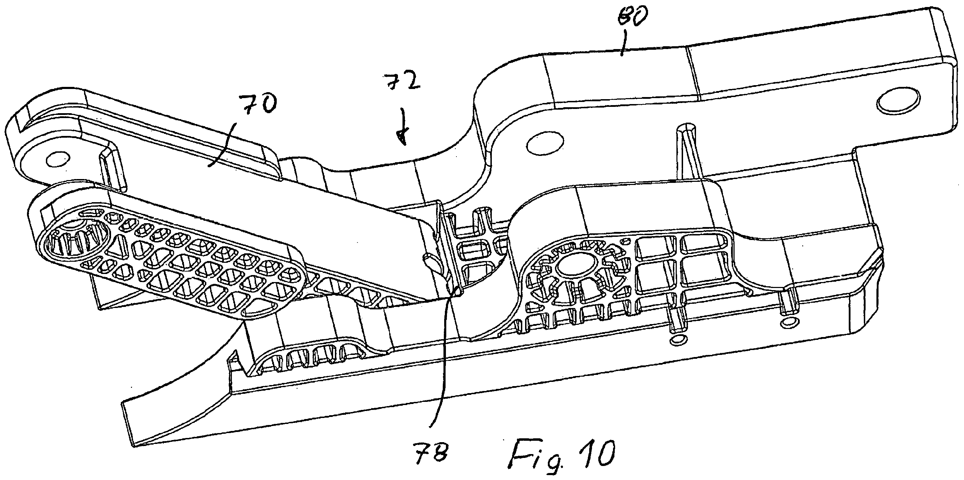

Fig. 10 zeigt den ersten Aufstellhebel 70 während der dritten kinematischen Phase, in der er ausschließlich eine Schwenkbewegung um die erste Schwenkachse 72 ausführt und dabei an dem Anschlag 78 anliegt.

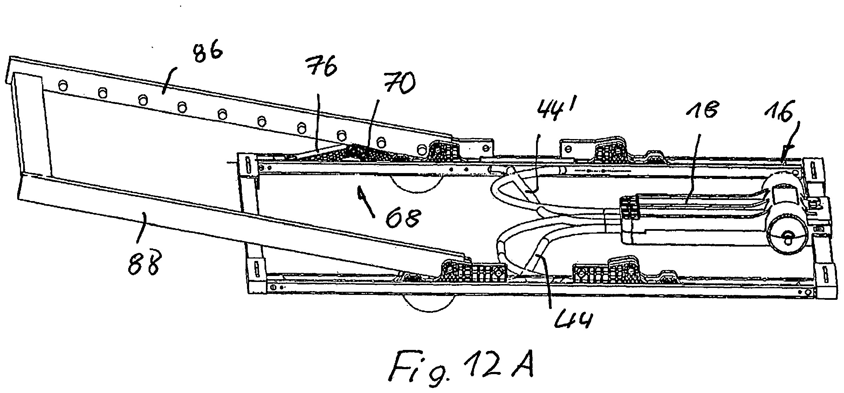

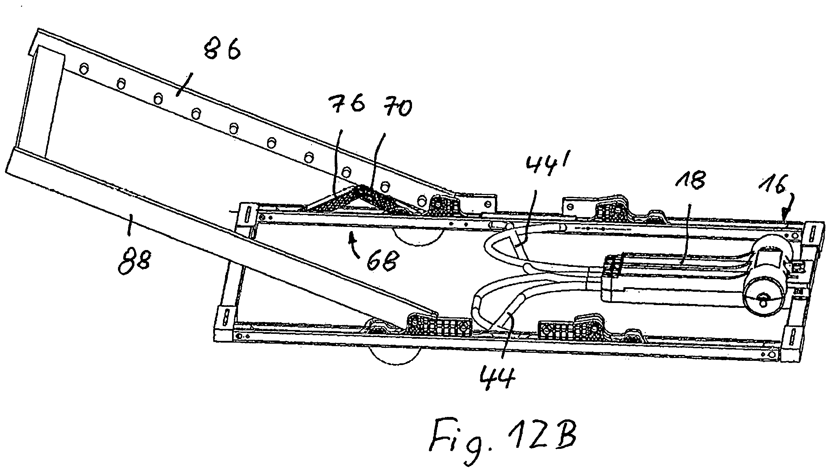

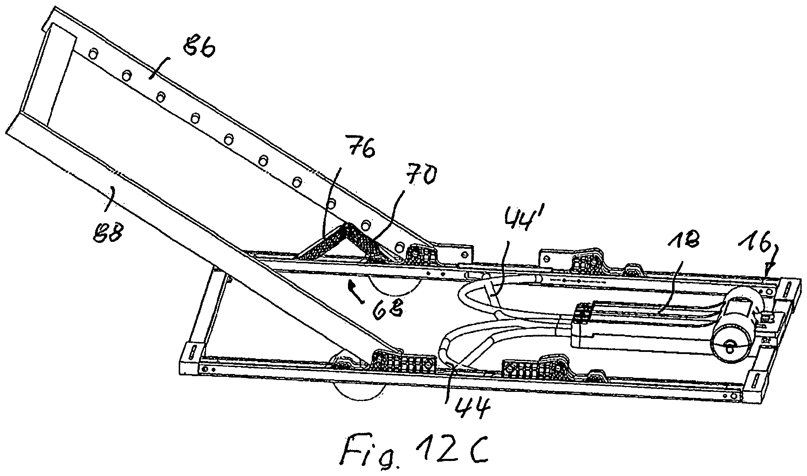

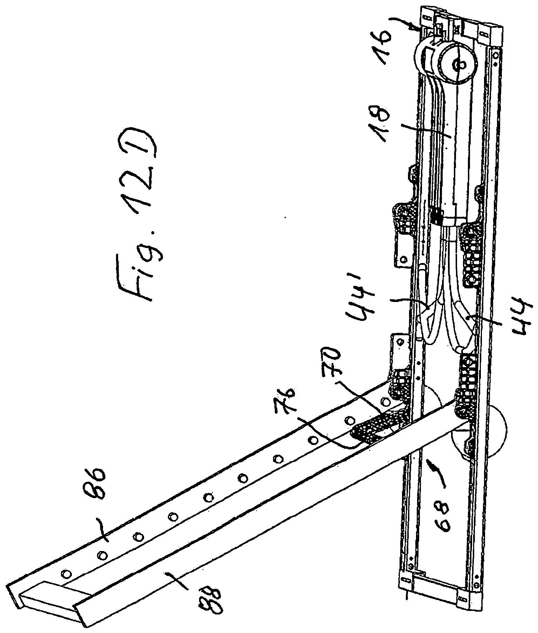

Fig. 12 verdeutlicht die Verstellung des Oberkörperstützteiles 8 mittels der Verstellhebelanordnung 68. Bei dem dargestellten Ausführungsbeispiel beaufschlagt die Aufstellhebel-Anordnung 68 einen Längsholm 86 des Oberkörperstützteiles 8 lose, indem der Längsholm 86 lose auf der Aufstellhebel-Anordnung 68 aufliegt. Seitlich zu dem Längsholm 86 beabstandet weist das Oberkörperstützteil 8 einen weiteren Längsholm 88 auf, dem eine entsprechende Aufstellhebel-Anordnung zugeordnet ist, die jedoch aus Gründen der Übersichtlichkeit in Fig. 12 nicht dargestellt ist. Die dem Längsholm 88 zugeordnete Aufstellhebel-Anordnung wirkt dabei mit dem Zugseil des Bowdenzuges 44 zusammen, wobei die Funktionsweise so ist, wie für die Aufstellhebel-Anordnung 68 beschrieben und daher hier nicht näher erläutert wird. Da die Zugseile der Bowdenzüge 44, 44' an derselben Spindelmutter 58 (vgl. Fig. 5) festgelegt sind, stellen sich die den Längsholmen 68, 88 zugeordneten Aufstellhebel-Anordnungen völlig synchron auf, so dass Verwindungen des Oberkörperstützteiles 8 während der Verstellbewegung zuverlässig vermieden sind.

Fig. 12B und 12C verdeutlichen die weitere Verstellbewegung des Oberkörperstützteiles 8. Fig. 12D zeigt die Endlage der Verstellbewegung, die einer maximal verstellten Position des Oberkörperstützteiles 8. relativ zu dem mittleren Stützteil bzw. dem Montagerahmen 16 entspricht.

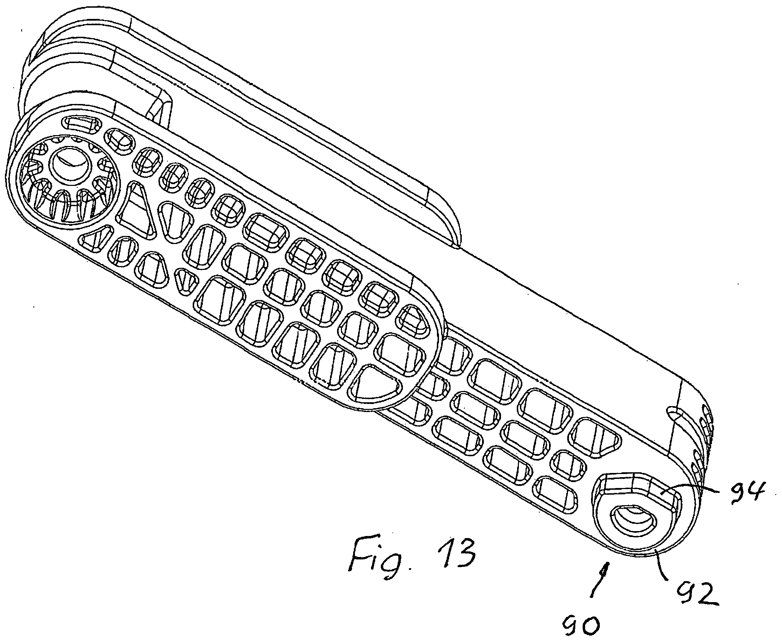

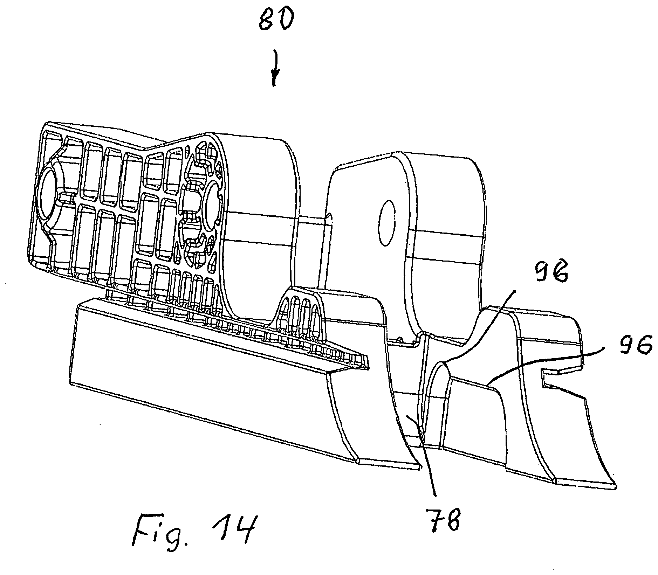

Anhand der Fig. 13 und 14 werden nachfolgend dem ersten Aufstellhebel 70 zugeordnete Verriegelungsmittel näher erläutert, wobei Fig. 13 den ersten Aufstellhebel 70 und Fig. 14 das Anschlagselement 18 jeweils für sich genommen zeigt. Dem ersten Aufstellhebel 70 sind Verriegelungsmittel zugeordnet, die in einer vorbestimmten Aufstelllage des ersten Aufstellhebels wirksam werden und den ersten Aufstellhebel 70 gegen eine translatorische Bewegung verriegeln, gleichzeitig eine Aufstellbewegung des ersten Aufstellhebels zulassen. Bei dem dargestellten Ausführungsbeispiel werden die Verriegelungsmittel wirksam, wenn der erste Aufstellhebel 70 an dem Anschlag 78 anliegend und verschwenkend eine vorbestimmte Aufstelllage erreicht. Bei dem dargestellten Ausführungsbeispiel weisen die Verriegelungsmittel einen (vgl. Fig. 13) Lagerzapfen 90 auf, der an dem der ersten Schwenkachse 72 zugewandten Ende des ersten Aufstellhebels 70 gebildet ist. Der Lagerzapfen 90 ist derart ausgebildet und eingerichtet, dass er in Verriegelungsposition drehbar bzw. schwenkbar in einer an dem Anschlagselement 80 gebildeten Lagerausnehmung gelagert ist und in einer Entriegelungsposition aus der Lagerausnehmung freikommt.

Wie aus Fig. 13 ersichtlich, weist der Lagerzapfen 90 einen im Querschnitt kreisförmigen Lagerabschnitt 92 sowie eine Abflachung 94 auf. Im Ergebnis ist der Lagerabschnitt 92 bei dem dargestellten Ausführungsbeispiel im Querschnitt etwa halbkreisförmig ausgebildet. Aus Fig. 13 ist nicht ersichtlich und deshalb wird hier erläutert, dass der erste Aufstellhebel 70 auf seiner dem Lagerzapfen 90 abgewandten Seite einen entsprechenden Lagerzapfen aufweist.

Fig. 14 zeigt eine Perspektivansicht des Anschlagselementes 80. Das Anschlagselement 80 weist eine Nut 96 auf, die an ihrem Ende in einen im Querschnitt abschnittsweise kreisförmigen Lagerflächenabschnitt 98 mündet, dessen Durchmesser größer ist als die lichte Weite der Nut 96.

Die Funktionsweise der Verriegelungsmittel ist wie folgt:
Wie oben anhand von Fig. 7B beschrieben, läuft während der Verstellbewegung das dem zweiten Aufstellhebel 76 abgewandte Ende des ersten Aufstellhebels 70 auf die Hubführung 84 auf und wird dadurch angehoben, was zu einem Aufstellen der Aufstellhebel 70, 76 führt. Hierbei ist der Lagerzapfen 90 translatorisch in der durch die Nut 96 gebildeten Führung geführt. Die lichte Weite der Nut 96 ist so bemessen, dass unter Berücksichtigung der Form des Lagerzapfens 90 und des Aufstellwinkels des ersten Aufstellhebels 70 der Lagerzapfen 90 translatorisch in der durch die Nut 96 gebildeten Führung geführt ist, ohne zu klemmen.

Am Ende der zweiten kinematischen Phase (vgl. die vorstehende Beschreibung unter Bezugnahme auf Fig. 7C und Fig. 11C) läuft das dem zweiten Aufstellhebel 76 abgewandte freie Ende des ersten Aufstellhebels 70 auf den an dem Anschlagselement 80 gebildeten Anschlag 78 auf, so dass eine weitere translatorische Bewegung der Aufstellhebel-Anordnung 86 unterbunden ist.

Während der sich daran anschließenden dritten kinematischen Phase führt der erste Aufstellhebel 70 ausschließlich eine Aufstellbewegung aus, indem er um die erste Schwenkachse 72 verschwenkt. Aufgrund der Formung des Lagerzapfens 90 und der Lagerausnehmung 98 verriegelt der Lagerzapfen 92 bei einem weiteren Aufstellen des ersten Austellhebels 70 an der Lagerausnehmung 98 derart, dass er gegen eine translatorische Bewegung gesichert ist, gleichzeitig eine weitere Aufstellbewegung des ersten Aufstellhebels 70 zugelassen ist.

Durch die Verriegelungsmittel ist sichergestellt, dass sich die Aufstellhebel-Anordnung 68 bei einer Rückstellung aus einer maximal verstellten Lage in Richtung auf die unverstellte Lage gleichmäßig absenkt. Die Rückstellung vollzieht sich derart, dass der erste Aufstellhebel 70 zurück in Richtung auf die unverstellte Lage verschwenkt. Durch die Verriegelungsmittel ist bis zu einer bestimmten Aufstelllage des ersten Aufstellhebels 70 ausschließlich eine Dreh- bzw. Schwenkbewegung zugelassen. In einer vorbestimmten Aufstellage hebt sich die Verriegelung auf, sodass sich der Lagerzapfen 90 daran anschließend translatorisch in der Nut 96 in Richtung von dem Anschlag 78 weg bewegt.

Ohne die Verriegelungsmittel bestünde die Gefahr, dass sich der erste Aufstellhebel bei einer Rückstellung sofort translatorisch bewegt und es daran anschließend zu einem schlagartigen Absenken kommt, was unerwünscht ist.

Die erfindungsgemäße Stützeinrichtung weist eine besonders geringe Bauhöhe auf, die, wie beispielsweise aus Fig. 1 ersichtlich ist, nicht oder nur geringfügig größer ist als die Profilhöhe der Längsholme des Lattenrostes 2. Aufgrund der Kombination eines Aufstellhebels bzw. einer Aufstellhebel-Anordnung in Kombination mit einem Bowdenzug weist die erfindungsgemäße Stützeinrichtung gleichzeitig eine besonders geringe Bauhöhe und einen einfachen Aufbau auf.

## Patentansprüche

1. Elektromotorisch verstellbare Stützeinrichtung für eine Polsterung eines Sitz- und/oder Liegemöbels, insbesondere eine Matratze eines Bettes,
mit wenigstens zwei relativ zueinander verstellbaren Stützteilen,
wobei wenigstens einem Stützteil zum Verstellen desselben ein Verstellorgan zugeordnet ist, das mit einem Elektromotor einer Antriebseinheit in Antriebsverbindung steht,
**dadurch gekennzeichnet,**
**dass** wenigstens ein Verstellorgan ein Aufstellhebel (70, 76) ist, der unter der Zugwirkung des Zugseiles eines Bowdenzuges (44, 44') aufstellbar ist und
**dass** der Aufstellhebel (70, 76) zur losen Beaufschlagung eines zu verstellenden Stützteiles (8) ausgebildet und eingerichtet ist.

2. Stützeinrichtung nach Anspruch 1, **dadurch gekennzeichnet, dass** das Verstellorgan ein erster Aufstellhebel (70) ist, der um eine erste Schwenkachse (72) verschwenkbar aufstellbar ist, wobei das der ersten Schwenkachse (72) zugewandte Ende des ersten Aufstellhebels (70) gelenkig und um eine zu der ersten Schwenkachse (72) parallele zweite Schwenkachse (74) verschwenkbar mit einem zweiten Aufstellhebel (76) verbunden ist, der mit dem Zugseil des Bowdenzuges (44) wirkungsverbunden ist, derart, dass sich die Aufstellhebel (70, 76) unter der Zugwirkung des Zugseils des Bowdenzuges (44) aufstellen.

3. Stützeinrichtung nach Anspruch 2, **dadurch gekennzeichnet, dass** dem ersten Aufstellhebel (70) ein Anschlag (78) zugeordnet ist, derart, dass der erste Aufstellhebel (70) beim Anliegen seines freien Endes um die erste Schwenkachse (72) verschwenkt.

4. Stützeinrichtung nach Anspruch 2 oder 3, **dadurch gekennzeichnet, dass** die durch den ersten Aufstellhebels (70) und den zweiten Aufstellhebel (76) gebildete Aufstellhebel-Anordnung (68) in einer ersten kinematischen Phase an oder in einer Führung linear verschieblich ist, wobei in der ersten kinematischen Phase die erste Schwenkachse (72) und die zweite Schwenkachse (74) sowie ein Kraftangriffspunkt des Zugseiles des Bowdenzuges (44) an dem zweiten Aufstellhebel im Wesentlichen in einer Ebene liegen.

5. Stützeinrichtung nach Anspruch 4, **dadurch gekennzeichnet, dass** das der ersten Schwenkachse (72) zugewandte freie Ende des ersten Aufstellhebels (70) insbesondere am Ende der ersten kinematischen Phase auf eine Hubführung (84) aufläuft, derart, dass das freie Ende des ersten Aufstellhebels (70) angehoben wird, insbesondere in einer zweiten kinematischen Phase.

6. Stützeinrichtung nach Anspruch 5, **dadurch gekennzeichnet, dass** das freie Ende des ersten Aufstellhebels (70) insbesondere am Ende der zweiten kinematischen Phase auf einen Anschlag (78) aufläuft, derart, dass der erste Aufstellhebel (70) beim Anliegen seines freien Endes an dem Anschlag (78) um die erste Schwenkachse (72) verschwenkt.

7. Stützeinrichtung nach einem der Ansprüche 2 bis 6, **dadurch gekennzeichnet, dass** dem ersten Aufstellhebel (70) Verriegelungsmittel zugeordnet sind, die in einer vorbestimmten Aufstellage des ersten Aufstellhebel (70) wirksam werden und den ersten Aufstellhebel (70) gegen eine translatorische Bewegung verriegeln, gleichzeitig eine Aufstellbewegung des ersten Aufstellhebels (70) zulassen.

8. Stützeinrichtung nach Anspruch 7, **dadurch gekennzeichnet, dass** die Verriegelungsmittel wirksam werden, wenn der erste Aufstellhebel (70) an dem Anschlag (78) anliegend und verschwenkend eine vorbestimmte Aufstelllage erreicht.

9. Stützeinrichtung nach Anspruch 6 oder 7, **dadurch gekennzeichnet, dass** die Verriegelungsmittel wenigstens einen Lagerzapfen (90) aufweisen, der derart ausgebildet und eingerichtet ist, dass er in Verriegelungsposition drehbar in einer Lagerausnehmung (98) des Anschlagselementes (80) gelagert ist und in Entriegelungsposition aus der Lagerausnehmung (98) freikommt.

10. Stützeinrichtung nach Anspruch 9, **dadurch gekennzeichnet, dass** der Lagerzapfen (90) einen zur Schwenklagerung dienenden, im Querschnitt kreisförmigen Lagerabschnitt (92) und eine Abflachung (94) aufweist, wobei der Lagerzapfen (90) in einer an dem Anschlagselement (80) gebildeten Nut (96) translatorisch geführt ist, die in einen abschnittsweise im Querschnitt kreisförmigen Lagerflächenabschnitt (98) mündet, dessen Durchmesser größer ist als die lichte Weite der Nut (96).

## Claims

1. Electromotively adjustable support means for a cushion of a seating or reclining furniture item, in particular a mattress of a bed,
with at least two support parts that are relatively adjustable relative to each other,
wherein an adjustment organ that is in drive connection with an electric motor of a drive unit is allocated to at least one support part for adjusting the same,
**characterised in that**
at least one adjustment organ is a righting lever (70, 76), which can be positioned upright under traction force of the traction rope of a Bowden cable (44, 44'), and
that the righting lever (70, 76) is designed and equipped for loosely acting on a support part (8) to be adjusted.

2. Support means according to claim 1, **characterised in that** the adjustment organ is a first righting lever (70) that can be pivoted to be positioned upright around a first pivot axis (72), wherein the end of the first righting lever (70) facing the first pivot axis (72) is articulated and can be pivoted around a second pivot axis (74) parallel to the first pivot axis (72) and is connected with a second righting lever (76), which is operatively connected with the traction rope of the Bowden cable (44) in such a way that the righting levers (70, 76) move upright under the traction force of the traction rope of the Bowden cable (44).

3. Support means according to claim 2, **characterised in that** a shoulder (78) is associated with the first righting lever (70) in such a way that the first righting lever (70) pivots around the first pivot axis (72) when its free end abuts against the same.

4. Support means according to claim 2 or 3, **characterised in that** the righting lever arrangement (68) formed by the first righting lever (70) and the second righting lever (76) is linearly displaceable on or in a guide during a first kinematic phase, wherein the first pivot axis (72) and the second pivot axis (74) as well as a point of load of the traction rope of the Bowden cable (44) lie substantially on one level at the second righting lever in the first kinematic phase.

5. Support means according to claim 4, **characterised in that** the free end of the first righting lever (70) facing the first pivot axis (72) runs onto a stroke guide (84), in particular at the end of the first kinematic phase, in such a way that the free end of the first righting lever (70) is lifted, in particular in a second kinematic phase.

6. Support means according to claim 5, **characterised in that** the free end of the first righting lever (70) runs onto a shoulder (78), in particular at the end of the second kinematic phase, in such a way that the first righting lever (70) pivots around the first pivot axis (72) when its free end lies against the shoulder (78).

7. Support means according to one of the claims 2 to 6, **characterised in that** locking means that become effective in a predetermined upright position of the first righting lever (70) are allocated to the first righting lever (70), and lock the first righting lever (70) against a translational movement whilst simultaneously allowing a righting movement of the first righting lever (70).

8. Support means according to claim 7, **characterised in that** the locking means become effective when the first righting lever (70) lies against the shoulder (78) and reach a predetermined upright position by pivoting.

9. Support means according to claim 6 or 7, **characterised in that** the locking means have at least one bearing pin (90) designed and equipped in such a way that it is rotatably mounted in a bearing recess (98) of the shoulder element (80) in the locked position, and is set free from the bearing recess (98) in the unlocked position.

10. Support means according to claim 9, **characterised in that** the bearing pin (90) has a bearing section (92) with a circular cross-section and serving for pivot bearing and a flattening (94), wherein the bearing pin (90) is held translationally in a groove (96) formed on the shoulder element (80), which opens into a bearing surface section (98) with a sectionally circular cross-section, the diameter of which is greater than the clear width of the groove (96).

## Revendications

1. Dispositif de soutien réglable à l'aide d'un moteur électrique pour un rembourrage d'un meuble de type siège et/ou de type lit, plus particulièrement un matelas de lit,
avec au moins deux parties de soutien réglables l'une par rapport à l'autre,
au moins une partie de soutien étant muni, pour le réglage de celle-ci, un organe de réglage qui est en liaison d'entraînement avec un moteur électrique d'une unité d'entraînement,
**caractérisé en ce que**
au moins un organe de réglage est un levier de mise en place (70, 76) qui peut être levé sous l'effet de la traction d'un câble de traction de câble Bowden (44, 44') et
le levier de mise en place (70, 76) est conçu et configuré pour la sollicitation lâche d'une partie de soutien (8) à régler.

2. Dispositif de soutien selon la revendication 1, **caractérisé en ce que** l'organe de réglage est un premier levier de mise en place (70) qui peut être mis en place de manière pivotante autour d'un premier axe de pivotement (72), l'extrémité du premier levier de mise en place (70), orientée vers le premier axe de pivotement (72), étant reliée de manière articulée et de manière pivotante autour d'un axe de pivotement (74) parallèle au premier axe de pivotement (70), avec un deuxième levier de mise en place (76), qui est relié de manière fonctionnelle avec le câble de traction du câble Bowden (44), de façon à ce que le levier de mise en place (70, 76) se mette en place sous l'effet de la traction du câble de traction du câble Bowden (44).

3. Dispositif de soutien selon la revendication 2, **caractérisé en ce que** le premier levier de mise en place (70) est muni d'une butée (78), de façon à ce que le premier levier de mise en place (70) pivote, lors de l'appui de son extrémité libre, autour du premier axe de pivotement (72).

4. Dispositif de soutien selon la revendication 2 ou 3, **caractérisé en ce que** le dispositif de leviers de mise en place (68), constitué du premier levier de mise en place (70) et du deuxième levier de mise en place (76), est mobile linéairement dans une première phase cinématique ou dans un guidage, moyennant quoi, dans la première phase cinématique, le premier axe de pivotement (72) et le deuxième axe de pivotement (74) ainsi qu'un point d'application de force du câble de traction du câble Bowden (44) se trouvent sur le deuxième levier de mise en place globalement dans un plan.

5. Dispositif de soutien selon la revendication 4, **caractérisé en ce que** l'extrémité libre du premier levier de mise en place (70), orienté vers le premier axe de pivotement (72), se dirige, plus particulièrement à la fin de la première phase cinématique, vers un guidage de levage (84), de façon à ce que l'extrémité libre du premier levier de mise en place (70) soit soulevée, plus particulièrement dans une deuxième phase cinématique.

6. Dispositif de soutien selon la revendication 4, **caractérisé en ce que** l'extrémité libre du premier levier de mise en place (70) se dirige, plus particulièrement à la fin de la deuxième phase cinématique, vers une butée (78), de façon à ce que le premier levier de mise en place (70) pivote, lors de l'appui de son extrémité contre la butée (78), autour du premier axe de pivotement (72).

7. Dispositif de soutien selon l'une des revendications 2 à 6, **caractérisé en ce que** le premier levier de mise en place (70) est muni de moyens de verrouillage qui sont actifs dans une position de mise en place prédéterminée du premier levier de mise en place (70) et qui verrouillent le premier levier de mise en place (70) contre un mouvement de translation et autorisent simultanément un mouvement de mise en place du premier levier de mise en place (70).

8. Dispositif de soutien selon la revendication 7, **caractérisé en ce que** les moyens de verrouillage sont actifs lorsque le premier levier de mise en place (70) est appuyé contre la butée (78) et atteint en pivotant une position de mise en place prédéterminée.

9. Dispositif de soutien selon la revendication 6 ou 7, **caractérisé en ce que** les moyens de verrouillage comprennent au moins un pivot (90) qui est conçu et configuré de façon à ce que, dans la position de verrouillage, il soit logé de manière rotative dans un évidement de palier (98) de l'élément de butée (80) et, dans la position de déverrouillage, il soit libéré de l'évidement de palier (98).

10. Dispositif de soutien selon la revendication 9, **caractérisé en ce que** le pivot (90) comprend une portion de palier (92) permettant un logement pivotant et de section circulaire et un méplat (94), le pivot (90) étant guidé en translation dans une rainure (96), réalisée sur l'élément de butée (80), qui débouche dans une portion à surfaces de palier (98) de section partiellement circulaire, dont le diamètre est supérieur au diamètre intérieur de la rainure (96).
